# EUROPEAN PATENT SPECIFICATION

(11) **EP 4 356 303 B1**
(45) Date of publication and mention of the grant of the patent: **26.11.2025**
(21) Application number: 22748065.4
(22) Date of filing: 10.06.2022
(51) Int. Cl.: G06N 3/067

(54) **DEVICE IMPLEMENTING POLARITON OPTICAL NEURAL NETWORK AND POLARITON OPTICAL NEURAL NETWORK**
VORRICHTUNG ZUR IMPLEMENTIERUNG EINES OPTISCHEN NEURONALEN POLARITONNETZWERKS UND OPTISCHES NEURONALES POLARITONNETZWERK
DISPOSITIF METTANT EN OEUVRE UN RÉSEAU DE NEURONES OPTIQUES POLARITON ET RÉSEAU DE NEURONES OPTIQUES POLARITON

(30) Priority: 15.06.2021 PL 43817021
(43) Date of publication of application: 24.04.2024
(73) Proprietor: Uniwersytet Warszawski, 00-927 Warszawa (PL); Instytut Fizyki Polskiej Akademii Nauk, 02-668 Warszawa (PL)
(72) Inventor: MATUSZEWSKI, Michal, 02-798 Warszawa (PL); PIETKA, Barbara, 02-830 Warszawa (PL); OPALA, Andrzej, 27-500 Opatów (PL); SZCZYTKO, Jacek, 05-082 Stare Babice (PL); MIREK, Rafal, 71-666 Szczecin (PL); TYSZKA, Krzysztof, 01-237 Warszawa (PL); KRÓL, Mateusz, 05-220 Zielonka (PL); FURMAN, Magdalena, 01-745 Warszawa (PL); SUFFCZYNSKI, Jan, 00-432 Warszawa (PL); PACUSKI, Wojciech, 00-801 Warszawa (PL); SEREDYNSKI, Bartlomiej, 02-776 Warszawa (PL)
(74) Representative: JD&P Patent Attorneys Joanna Dargiewicz & Partners
(86) International application number: PCT/IB2022/055418
(87) International publication number: WO 2022/263983

(56) References cited:
- BALLARINI D ET AL: "Polaritonic neuromorphic computing outperforms linear classifiers", ARXIV.ORG, CORNELL UNIVERSITY LIBRARY, 201 OLIN LIBRARY CORNELL UNIVERSITY ITHACA, NY 14853, 7 November 2019 (2019-11-07), XP081528362
- JULIAN D T\"OPFER ET AL: "Time-Delay Polaritonics", ARXIV.ORG, CORNELL UNIVERSITY LIBRARY, 201 OLIN LIBRARY CORNELL UNIVERSITY ITHACA, NY 14853, 22 May 2019 (2019-05-22), XP081624309, DOI: 10.1038/S42005-019-0271-0
- LIEW T C H ET AL: "Optical circuits based on Polariton Neurons in Semiconductor Microcavities", ARXIV.ORG, CORNELL UNIVERSITY LIBRARY, 201 OLIN LIBRARY CORNELL UNIVERSITY ITHACA, NY 14853, 6 March 2008 (2008-03-06), XP080403399, DOI: 10.1103/PHYSREVLETT.101.016402
- ANDRZEJ OPALA ET AL: "Neuromorphic computing in Ginzburg-Landau polariton lattice systems", ARXIV.ORG, CORNELL UNIVERSITY LIBRARY, 201 OLIN LIBRARY CORNELL UNIVERSITY ITHACA, NY 14853, 13 August 2018 (2018-08-13), XP081364703, DOI: 10.1103/PHYSREVAPPLIED.11.064029
- HOLGER SUCHOMEL ET AL: "Prototype of a bistable polariton field-effect transistor switch", ARXIV.ORG, CORNELL UNIVERSITY LIBRARY, 201 OLIN LIBRARY CORNELL UNIVERSITY ITHACA, NY 14853, 10 May 2017 (2017-05-10), XP081276387, DOI: 10.1038/S41598-017-05277-1

## Description

The subject of the invention is the device implementing the polariton optical neural network and the polariton optical neural network using nonlinear effects in optical microcavities. The basis of operation of this optical neural network is transferring an optical signal from the network input to the network output through the nonlinear transformation corresponding to the mathematical operational model of a feedforward neural network. The nonlinear transformation is understood as a representation, in which a combined amplitude of output lightwave is not the linear function of a combined amplitude of input lightwave.

Such a transformation is realized by the passing of the optical signals in the form of pulsed light through the element with nonlinear optical characteristics and through the linear elements. Such an approach results in increasing the speed of operation, performance, and the energetic efficiency of calculations as compared to the existing solutions. The nonlinear transformation is realized in the optical microcavity containing exciton-polaritons, under the regime of strong light-matter coupling. All operations in this neuromorphic network are realized optically, without electrical equipment for coding the signals, which allows to obtain high computational speeds and low energy consumption.

Performance and efficiency of traditional neural networks realized by electronic systems are limited due to data transmission speed between the processor and the memory (the so-called "von Neumann bottleneck"). In order to remove this limitation, hardware solutions of architecture imitating neural connections, the so-called neuromorphic circuits, are being applied.

Using the suggested optical system for the realization of such an architecture enables a significant increase in performance and efficiency of the network's performance, as compared to conventional solutions. The efficiency of electronic systems is limited due to the data transfer speed and the loss of energy occurring in electrical circuits. One of the suggested methods of solving this problem is to replace electrical signals with optical signals, for example with short pulses of light. Currently, this solution is widely used for transferring data on longer distances, i.e. in optical fibers. One of the most important obstacles in using light for fully optical data processing is a relative weakness of nonlinear effects in conventional materials, which creates a need to apply high-energy pulses.

In the current state of art there are well-known solutions applying nonlinear optical elements for the implementation of neuromorphic calculations, for example, photonic integrated circuits that are based on phenomena of the interference and saturable absorption (American patent specification no. US 10,268,232 B2), optical fibers (Appeltant et al. in Nature Communications 2, article number 468), semiconductor optical amplifiers (Vandoorne et al. in Optics Express 16(15), pp. 11182-11192), silicon passive optical elements (American patent specification no. US 9,477,136 B1).

An optical element realizing binary operations (optical gates) using optical cavities with a variable refractive index is also known (American patent specification no. US 7,720,339 B2).

Exciton-polaritons in microcavities were discussed in the context of the implementation of optical circuits and logic-gate operations (Liew et al. Phys. Rev. Lett. 101, 016402 (2008); Suchomel et al. Scientific Reports, 7: 5114 (2017)), also as a reservoir layer in neural networks (Opala et al. Phys. Rev. Applied 11, 064029 (2019)), but only one layer with nonlinear activation function was realized optically (Ballarini et al. Nano Lett. 2020, 20, 5, 3506-3512; Töpfer et al. Communications Physics 3, 2 (2020)).

None of the above-mentioned systems implements the nonlinear function of neural activation by using the exciton-polariton optical microcavity for the application in a fully optical neural network without comprising electronics. In particular, the above works describe concepts that include optoelectronic or electronic information processing as an integral part of the neural network operation. Therefore, the technical challenge of the present invention was to realize the artificial neural network, which uses solely optical signals, basing its operation on the phenomenon of the exciton-polariton nonlinear response with the use of optical microcavity systems. The designed device is based on binarization of certain signals, which is not, however, a precondition for the system operation, and linear transformation, which is realized by conventional optical elements. Such a system will allow the practical realization of the artificial neural network with a very low energy consumption per singular operation and high computational power, defined as the so-called performance density, as compared to the conventional technologies.

The summary of the invention is the device implementing an optical neural network, comprising an input layer composed of optical elements, ensuring linear pre-processing and distribution of optical input signals, a middle layer comprising nonlinear optical elements and realizing a nonlinear transformation of the pre-processed input signals, an output layer comprising linear optical elements, realizing a linear transformation of signals that had been transformed nonlinearly and producing output signals, passive optical systems that optically couple the input layer, middle layer and output layer and are characterized in that the nonlinear transformation in the middle layer occurs as a result of the interaction of the pre-processed input signals with a nonlinear element or elements in the form of optical microcavity or multiple microcavities comprising exciton-polaritons.

Preferably, input signals and/or output signals of the nonlinear element are binary-coded. Preferably, the signals are coded by the intensity of light.

Preferably, one or more layers consist solely of passive optical elements that enable modulation and distribution of the optical signal, such as optical filters, lenses, mirrors, absorbents, beam splitters, optical microcavities, diffractive optical elements, spatial light modulators.

Preferably, the middle layer includes nodes that conduct binary operations of exclusive or (XOR) on every signal.

Preferably, the linear element realizes the optical operation of multiplying a vector by a matrix.

Preferably, the middle layer includes a subsidiary channel that transmits input pulses, bypassing the optical microcavity.

Preferably, the device according to the present invention includes an element summing up input signals from the microcavity and from the subsidiary channel.

Preferably, the optical microcavity is an optical resonator, one of whose own modes has electric field distribution inside the cavity with maximums of the electric field strength placed on the spots, where the optically active material is located.

Preferably, optical signals have frequency adjusted to optical microcavity resonance line frequency, corresponding to polariton excitation in the optical microcavity.

Preferably, optical signals have frequency that is not in resonance with any optical microcavity spectral line, but corresponding to a high transmission rate through optical microcavity mirrors.

Preferably, a nonlinear optical element combined with linear elements has a negative differential response within a certain range of the light intensity .

Preferably, the optical microcavity together with a passive optical element in the form of spectral filter realizes a negative differential response.

Preferably, the optically active material in the microcavity is of the group of perovskites and/or two-dimensional materials and/or organic materials, in which exciton-polaritons are found at room temperature.

Preferably, the device according to the present invention constitutes one of the layers out of a multilayer neural network.

The subject of the invention is also the optical neural network, which includes at least one layer realized by the device described above.

The present invention enables the realization of a fully optical neural network of high efficiency and performance on the basis of microcavities hosting exciton-polaritons. The structure of the device is based on the optical microcavity with optically active material, which enables the induction of excitons interacting with light. Polariton interaction leads to strongly nonlinear optical response in the function of intensity of the transferred signal. Neuromorphic calculations methodology is based on this phenomenon, with at least one middle layer where the nonlinear activation function is realized.

Further transformation of the signal is realized with the use of a linear operation based on optical elements modifying the amplitude of individual optical signals.

The subject of the invention is visualized in the drawing figures, wherein:
Fig. 1 presents the block diagram of the device implementing optical neural network;
Fig. 2 presents one of the possible realizations of the device implementing an optical neural network;
Fig. 3 presents the structural scheme of a photonic optical microcavity.

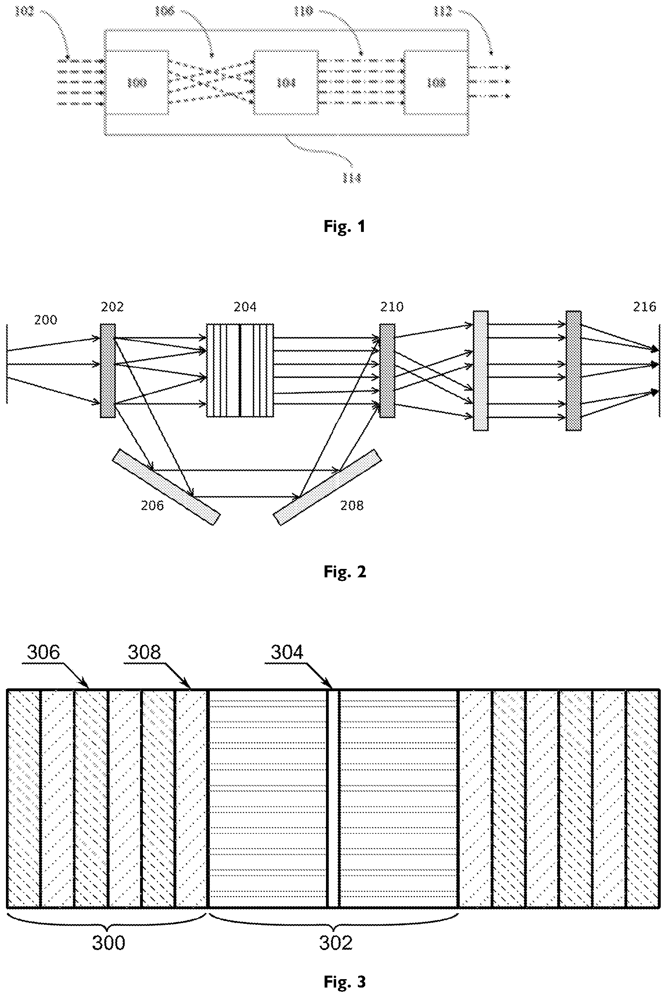

The device according to the present invention, as shown in Fig. 1, comprises an optical system of input elements (100), ensuring linear pre-processing and distribution of optical input signals (102). Signals obtained this way (106) are directed to the middle layer (104), including nonlinear optical elements in the form of polariton microcavities. The middle layer (104) realizes nonlinear transformation of the pre-processes input signals (106). Signals transformed in nonlinear manner (110) are directed to the output layer (108) composed of linear optical elements, realizing linear transformation and generating output signals (112).

Optical signals at the input and/or at the output of the nonlinear element are binary-coded using defined levels of amplitude and/or phase of light wave. Signals are transferred between the elements via optical fibers or propagate in space or in optical media. In both cases the number of signals running simultaneously is determined and defined by the geometry of each element, but it may be different at the input and at the output of an individual element.

The process of light signals transmission across the consecutive elements of the device realizes the operation of a feedforward neural network. Consecutive elements, nonlinear and linear, correspond to a single layer of neural network. The described device may be a part of a larger device, where it functions as a single neural network layer.

In one of the implementations, operation realized by a nonlinear element on every signal after passing through the nonlinear element is realized with the use of a microcavity, and also a subsidiary channel, via which signals are transmitted, bypassing the microcavity. The nonlinear element also comprises an element summing up signals from the microcavity and from the subsidiary channel.

In one of the implementations, nonlinear element operation on each of transmitted signals corresponds to the binary operation of exclusive or (XOR), including appropriately defined levels of optical signal amplitude corresponding to binary truth values. These levels may differ at the output and at the input of the nonlinear element.

In one of the implementations, the operation of the linear element in the output layer on each transiting signal corresponds to vector multiplication encoded by the optical signal amplitudes by the matrix of fixed elements. Matrix elements can be encoded e.g. by a spatial optical modulator or a passive optical element, such as a diffractive optical element.

In one of the implementations, optical signals propagate in a fiber optic matrix. In another implementation, signals propagate freely in space or in an optical medium. In that case, lenses, mirrors and other optical elements can be used to manipulate the routes of pulse propagation. In another implementation all or some elements of the device are included in a photonic integrated circuit.

The operation of an exemplary optical network was tested via numerical simulation of binary classification of exclusive OR function in the fully optical implementation and classification of data set from the Modified National Institute of Standards and Technology database (MNIST). One hundred percent classification accuracy was demonstrated for exclusive OR and approximately 96% classification accuracy was demonstrated for MNIST handwritten digits classification.

It was estimated that with the use of currently available optical elements, the device under this invention reaches energy efficiency in the range of 10¹⁷ of SOPS W⁻¹ (synaptic operations per second per watt) and efficiency density of 10⁶ GOPS s⁻¹ mm⁻² (giga operations per second per square millimeter), which are significantly higher than those in current semiconductor technology.

### Embodiment

Fig. 2 presents one of the possible neural network realizations. Input light pulses (200) of full width at half maximum in the range of picoseconds contain neural network input data encoded by pulse intensity, so that the binary value of "0" corresponds to a pulse of low light intensity, and the binary value of "1" corresponds to a pulse of high light intensity. N light pulses coding a single sample being the subject of classification, comprising N bits, falls simultaneously on a diffractive optical element (202), whose shape enables the splitting of light pulses falling on multiple optical channels, propagating in strictly designated directions. Every one of N pulses is split into 4 M copies, out of which 2 M is directed onto the optical microcavity (204), and the remaining part onto the structure of two mirrors (206 and 208), which transfer pulses bypassing the microcavity.

An exemplary optical microcavity (204) is a photonic structure (Fig. 3) consisting of two distributed Bragg reflectors, optical resonator (302) and optically active material (304). Distributed Bragg reflectors create alternately arranged layers (306) and (308) of various refractive indexes within the material. Arrangements, thickness and refractive indexes of the layers comply with the conditions of light interference, so that waves reflected from the subsequent middle surfaces, for wavelengths of light called the resonance wavelength and in its close wavelengths range, reflect from the structure completely creating the so-called energy gap. Distributed Bragg reflectors are separated from one another by a layer (302) of optical thickness equal to the integral multiple of the resonant cavity wavelength, so that the obtained resonator resembles the Fabry-Pérot interferometer with the photonic mode localized in the energy gap. Inside the optical microcavity (302), at the maximum of cavity mode electromagnetic field distribution, there is an optically active material (304). In the optically active material (304) excitation in the form of excitons is possible. As a result of strong interaction between cavity modes and exciton resonance, exciton-polaritons are created, new eigenmodes of the optical cavity with optically active material.

The exemplary realization of the optical microcavity with optically active material (204) is a structure grown on a gallium arsenide substrate of [100] orientation using molecular-beam epitaxy. The 1 µm thick CdTe layer is then grown on the substrate, and on top of it there are 21 pairs of alternately arranged semiconductor layers based on four-component compounds Cd_{0.84}Zn_{0.08}Mg_{0.08}Te, 64 nm thick and Cd_{0.61}Zn_{0.06}Mg_{0.33}Te 71 nm thick. The subsequent layer consists of 223 nm Cd_{0.84}Zn_{0.08}Mg_{0.008}Te and inside there are three layers consisting of 10 nm thick Cd_{0.91}Zn_{0.088}Mn_{0.002}Te, separated from each other by 10 nm. Ultimately, 22 layer pairs of 64 nm thick Cd_{0.84}Zn_{0.08}Mg_{0.08}Te and 71 nm thick Cd_{0.6},Zn_{0.06}Mg_{0.33}Te are being grown. For the described operation, the structure is cooled in cryostat to a temperature of 4 K by the means of cryogenic liquids (liquid helium).

Pulses falling on the optical microcavity (204) are directed in such a manner, that they fall on its surface, creating a N x M matrix of equidistant spots separated from each other by the distance in the range of tens of micrometers and of the size of several micrometers, in such a manner that every spot is a neural network node, with two out of 4 N x M pulse copies falling on it.

Pulses that propagate bypassing the microcavity, directed by two mirrors (206 and 208) are spatially shaped in the same manner. After passing through the microcavity (204), output pulses fall on the second diffractive optical element (210), on the surface of which they link with pulses that propagated with the reflection from the mirrors (206 and 208). The intensity of respective pulse copies and optical path lengths are chosen in such a manner, that total light intensity on a given node on the surface of the second diffractive element (210) corresponds to the result of exclusive or (XOR) operation on two input bits, which correspond to the pulses assigned to the node. Such an intensity is achieved due to non-linearity of light interaction with the material in microcavity (204) and interference of pulses passing through the microcavity and bypassing the microcavity.

The second diffractive optical element (210) is responsible for another splitting of the falling pulses in such a manner, that every M x N node is split into K copies, wherein K is a number of classes undergoing classification. Subsequently, pulses split in that manner are directed onto a spatial phase modulator (212), which is responsible for selective weakening of light intensity in each one of N x *M* x K pulses, according to weights of neural network input layers.

After passing through the spatial phase modulator (212), optical pulses fall onto a third diffractive optical element (214), which is responsible for focusing N x *M* x K pulses on the set of K detectors (216), where every detector corresponds to one of the classes. As a result, total light intensity falling on the detector is an outcome of N x M exclusive-OR operation on the input bits in the middle layer of the neural network, which are then weighted with respective weights in the neural network output layer. Amongst K classes one class is selected, and it corresponds to the detector that has registered the highest total pulse light intensity out of pulses falling on it.

## Claims

1. A device implementing polariton optical neural network, the device comprising:
an input layer (100) consisting of optical elements configured to ensure linear pre-processing and distribution of input optical signals (102), to obtain preprocessed input signals (106),
a middle layer (104), consisting of nonlinear optical elements, configured to realize nonlinear transformation of the pre-processed input signals (106), to obtain signals transformed in nonlinear manner (110),
an output layer (108) consisting of linear optical elements, configured to realize linear transformation of the signals transformed in a nonlinear manner (110) and configure to generate output signals,
passive optical systems (114) configured to optically couple the input layer (100), the middle layer (104), and the output layer (108) wherein the middle layer is configured to realize the nonlinear transformation as a result of interaction of pre-processed input signals (106) with a nonlinear element or elements in the form of one or multiple optical microcavities hosting exciton-polaritons,
wherein consecutive optical elements, nonlinear and linear, across which signals are transmitted, correspond to a single layer of neural network,
wherein the optical signals at the input and at the output of the nonlinear elements are preferably binary-coded using defined levels of amplitude and/or phase of light wave, and
wherein the device is configured to realize all the operation in the polariton optical neural network optically, without electrical equipment for coding the signals.

2. The device according to claim 1, wherein the input and/or output signals of the nonlinear element are binary-coded.

3. The device according to claim 1 or claim 2, wherein the signals are coded by the light intensity.

4. The device according to any of claims 1-3, wherein one or more layers consists solely of passive optical elements enabling modulation and distribution of the optical signal, such as optical filters, lenses, mirrors, absorbents, beam splitters, optical microcavities, diffractive optical elements, spatial light modulators.

5. The device according to claim 2 or the device according to any of claims 3, 4 when claims 3, 4 are dependent on claim 2, wherein the middle layer contains nodes, which are configured to conduct binary operations of exclusive or (XOR) on each signal.

6. The device according to any of claims 1-5, wherein the linear element are configured to realize the optical operation of vector multiplication by a matrix.

7. The device according to any of claims 1-6, wherein the middle layer contains a subsidiary channel, configured so that input pulses are transmitted therethrough bypassing the optical microcavity.

8. The device according to any of claims 1-7 wherein it comprises an element configured to sum up input signals from the microcavity and the subsidiary channel.

9. The device according to any of claims 1-8 wherein the optical microcavity is an optical resonator, one of whose own modes comprises electric field distribution inside the cavity with maximums of the electric field strength placed on the spots where the optically active material is located.

10. The device according to any of claims 1-9 wherein optical signals have frequency tuned-up to optical microcavity resonance line frequency corresponding to polariton excitation in the optical microcavity.

11. The device according to any of claims 1-10 wherein optical signals have frequency that is not in resonance with any optical microcavity spectral line, but corresponding to a high transmission rate through optical microcavity mirrors.

12. The device according to any of claims 1-11 wherein a nonlinear optical element combined with linear elements has a negative differential response within a certain range of the light intensity .

13. The device according to any of claims 1-12 wherein the optical microcavity together with a passive optical element in the form of spectral filter are configured to realize a negative differential response.

14. The device according to any of claims 1-13 wherein the optically active material in the microcavity is of the group of perovskites and/or two-dimensional materials and/or organic materials, in which exciton-polaritons are found at room temperature.

15. The device according to any of claims 1-14 wherein it constitutes one of the layers out of a multilayer neural network.

16. Polariton optical neural network wherein it includes at least one layer realized by the device described in any claims 1-15.

## Patentansprüche

1. Einrichtung, die ein optisches neuronales Polaritonen-Netzwerk implementiert, wobei die Einrichtung enthält:
eine Eingabeschicht (100), die aus optischen Elementen besteht, die zum Sicherstellen einer linearen Vorbearbeitung und Verteilung von optischen Eingangssignalen (102) ausgebildet sind, zum Erhalten von vorbearbeiteten Eingangssignalen (106),
eine Mittelschicht (104), die aus nicht-linearen optischen Elementen besteht, die zum Realisieren einer nicht-linearen Transformation der vorbearbeiteten Eingangssignale (106) ausgebildet sind, zum Erhalten von Signalen, die in einer nicht-linearen Art und Weise (110) transformiert sind,
eine Ausgabeschicht (108), die aus linearen optischen Elementen besteht, die zum Realisieren einer linearen Transformation der auf eine nicht-lineare Art und Weise (110) transformierten Signale ausgebildet sind und zum Erzeugen von Ausgangssignalen ausgebildet sind,
passive optische Systeme (114), die zum optischen Koppeln der Eingabeschicht (100), der Mittelschicht (104) und der Ausgabeschicht (108) ausgebildet sind,
wobei die Mittelschicht ausgebildet ist zum Realisieren der nicht-linearen Transformation in Folge einer Interaktion der vorbearbeiteten Eingangssignale (106) mit einem nicht-linearen Element oder Elementen in Form von einen oder mehrere optische Mikrohohlräume unterbringende Exziton-Polaritonen,
wobei aufeinanderfolgende optische Elemente, nicht-linear und linear, über die Signale übertragen werden, einer einzigen Lage des Neuralnetzwerks entsprechen,
wobei die optischen Signale an dem Eingang und an dem Ausgang der nicht-linearen Elemente vorzugsweise binär kodiert sind unter Verwendung definierter Niveaus von Amplitude und/oder Phase der Lichtwelle, und
wobei die Einrichtung ausgebildet ist, dass sie die gesamte Operation in dem optischen Polaritonen-Neuralnetzwerk optisch realisiert ohne elektrische Ausstattung zum Kodieren der Signale.

2. Einrichtung nach Anspruch 1, wobei die Eingangs- und/oder Ausgangssignale des nicht-linearen Elements binär kodiert sind.

3. Einrichtung nach Anspruch 1 oder Anspruch 2, wobei die Signale durch die Lichtintensität kodiert werden.

4. Einrichtung nach einem der Ansprüche 1 - 3, wobei eine oder mehrere Schichten nur aus passiven optischen Elementen bestehen, die eine Modulation und Verteilung des optischen Signals ermöglichen, wie beispielsweise optische Filter, Linsen, Spiegel, Absorptionsmittel, Strahlteiler, optische Mikrohohlräume, diffraktive optische Elemente, räumliche Lichtmodulatoren.

5. Einrichtung nach Anspruch 2 oder Einrichtung nach einem der Ansprüche 3, 4, wenn Ansprüche 3, 4 von Anspruch 2 abhängen, wobei die Mittelschicht Knoten enthält, die ausgebildet sind zum Durchführen von binären Operationen eines exklusiven oder (XOR) für jedes Signal.

6. Einrichtung nach einem der Ansprüche 1 - 5, wobei das lineare Element ausgebildet ist zum Realisieren der optischen Operation einer Vektormultiplikation durch eine Matrix.

7. Einrichtung nach einem der Ansprüche 1 - 6, wobei die Mittelschicht einen untergeordneten Kanal enthält, der derart ausgebildet ist, dass Eingangspulse dort hindurch übertragen werden, wobei sie die optischen Mikrohohlräume umgehen.

8. Einrichtung nach einem der Ansprüche 1 - 7, wobei sie ein Element enthält, das ausgebildet ist zum Zusammenfassen von Eingangssignalen aus dem Mikrohohlraum und dem untergeordneten Kanal.

9. Einrichtung nach einem der Ansprüche 1 - 8, wobei der optische Mikrohohlraum ein optischer Resonator ist, dessen einer Modus eine elektrische Feldverteilung im Inneren des Hohlraums mit Maxima der elektrischen Feldstärke an den Stellen platziert aufweist, wo sich das optisch aktive Material befindet.

10. Einrichtung nach einem der Ansprüche 1-9, wobei optische Signale eine Frequenz aufweisen, die auf die Frequenz der optischen Mikrohohlraumresonanzlinie abgestimmt ist, die einer Polariton-Anregung im optischen Mikrohohlraum entspricht.

11. Einrichtung nach einem der Ansprüche 1 -10, wobei optische Signale eine Frequenz aufweisen, die nicht in Resonanz mit irgendeiner Spektrallinie eines optischen Mikrohohlraums steht, sondern einer hohen Übertragungsrate durch optische Mikrohohlraum-Spiegel entspricht.

12. Einrichtung nach einem der Ansprüche 1 - 11, wobei ein nicht-lineares optisches Element, das mit linearen optischen Elementen kombiniert ist, ein negatives Differentialansprechen aufweist innerhalb eines gewissen Bereichs der Lichtintensität.

13. Einrichtung nach einem der Ansprüche 1 - 12, wobei der optische Mikrohohlraum zusammen mit einem passiven optischen Element in Form eines Spektralfilters ausgebildet sind zum Realisieren eines negativen Differentialansprechens.

14. Einrichtung nach einem der Ansprüche 1-13, wobei das optisch aktive Material in dem Mikrohohlraum aus der Gruppe der Perowskite und/oder zweidimensionaler Materialien und/oder organischer Materialien, bei denen Exziton-Polaritonen bei Raumtemperatur gefunden werden.

15. Einrichtung nach einem der Ansprüche 1 - 14, wobei sie eine der Schichten aus einem mehrschichtigen Neuralnetzwerk bildet.

16. Neuronales Polariton-Netzwerk, wobei es wenigstens eine Schicht aufweist, die durch die Einrichtung realisiert wird, die in einem der Ansprüche 1 - 15 beschrieben wird.

## Revendications

1. Dispositif mettant en œuvre un réseau neuronal optique à polaritons, le dispositif comprenant :
une couche d'entrée (100) consistant en des éléments optiques, configurée pour garantir un prétraitement linéaire et une distribution de signaux optiques d'entrée (102), afin d'obtenir des signaux d'entrée prétraités (106),
une couche centrale (104) consistant en des éléments optiques non linéaires, configurée pour réaliser une transformation non linéaire des signaux d'entrée prétraités (106), afin d'obtenir des signaux transformés de manière non linéaire (110),
une couche de sortie (108) consistant en des éléments optiques linéaires, configurée pour réaliser une transformation linéaire des signaux transformés d'une manière non linéaire (110) et configurée pour produire des signaux de sortie,
des systèmes optiques passifs (114) configurés pour coupler optiquement la couche d'entrée (100), la couche centrale (104) et la couche de sortie (108)
dans lequel la couche centrale est configurée pour réaliser la transformation non linéaire en tant que résultat d'une interaction de signaux d'entrée prétraités (106) avec un élément non linéaire ou des éléments sous la forme d'une ou de multiples microcavités optiques hébergeant des excitons-polaritons,
dans lequel les éléments optiques consécutifs, non linéaires et linéaires, à travers lesquels des signaux sont transmis, correspondent à une unique couche de réseau neuronal,
dans lequel les signaux optiques à l'entrée et à la sortie des éléments non linéaires sont de préférence codés en binaire à l'aide de niveaux définis d'amplitude et/ou de phase d'onde lumineuse, et
dans lequel le dispositif est configuré pour réaliser toute l'opération dans le réseau neuronal optique à polaritons optiquement, sans équipement électrique pour coder les signaux.

2. Dispositif selon la revendication 1, dans lequel les signaux d'entrée et/ou de sortie de l'élément non linéaire sont codés en binaire.

3. Dispositif selon la revendication 1 ou la revendication 2, dans lequel les signaux sont codés par l'intensité lumineuse.

4. Dispositif selon l'une quelconque des revendications 1-3, dans lequel une ou plusieurs couches consistent exclusivement en éléments optiques passifs activant une modulation et une distribution du signal optique, tels des filtres optiques, des lentilles, des miroirs, des absorbants, des séparateurs de faisceau, des microcavités optiques, des éléments optiques diffractionnels, des modulateurs spatiaux de lumière.

5. Dispositif selon la revendication 2 ou dispositif selon l'une quelconque des revendications 3, 4 lorsque les revendications 3, 4 sont dépendantes de la revendication 2, dans lequel la couche centrale contient des nœuds, lesquels sont configurés pour mener des opérations binaires d'exclusif ou de (XOR) sur chaque signal.

6. Dispositif selon l'une quelconque des revendications 1-5, dans lequel l'élément linéaire est configuré pour réaliser l'opération optique de multiplication vectorielle par une matrice.

7. Dispositif selon l'une quelconque des revendications 1-6, dans lequel la couche centrale contient un canal subsidiaire, configuré de sorte que des impulsions d'entrée soient transmises à travers celui-ci en contournant la microcavité optique.

8. Dispositif selon l'une quelconque des revendications 1-7, dans lequel il comprend un élément configuré pour additionner des signaux d'entrée depuis la microcavité et le canal subsidiaire.

9. Dispositif selon l'une quelconque des revendications 1-8, dans lequel la microcavité optique est un résonateur optique, dont l'un des modes propres comprend une distribution de champ électrique à l'intérieur de la cavité avec des maxima de l'intensité de champ électrique placés sur les points où le matériau optiquement actif est situé.

10. Dispositif selon l'une quelconque des revendications 1-9, dans lequel des signaux optiques présentent une fréquence réglée sur une fréquence de raie de résonance de microcavité optique correspondant à un excitation de polariton dans la microcavité optique.

11. Dispositif selon l'une quelconque des revendications 1-10, dans lequel des signaux optiques présentent une fréquence qui n'est pas en résonance avec une quelconque raie spectrale de microcavité optique, mais correspondant à un taux de transmission élevé à travers des miroirs de microcavité optique.

12. Dispositif selon l'une quelconque des revendications 1-11, dans lequel un élément optique non linéaire combiné à des éléments linéaires présente une réponse différentielle négative à l'intérieur d'une certaine plage de l'intensité lumineuse.

13. Dispositif selon l'une quelconque des revendications 1-12, dans lequel la microcavité optique ensemble avec un élément optique passif sous la forme d'un filtre spectral sont configurés pour réaliser une réponse différentielle négative.

14. Dispositif selon l'une quelconque des revendications 1-13, dans lequel le matériau optiquement actif dans la microcavité est dans le groupe composé de pérovskites et/ou de matériaux bidimensionnels et/ou de matériaux organiques, dans lesquels des excitons-polaritons se trouvent à température ambiante.

15. Dispositif selon l'une quelconque des revendications 1-14, dans lequel il constitue l'une des couches parmi un réseau neuronal multicouche.

16. Réseau neuronal optique à polaritons, dans lequel il inclut au moins une couche réalisée par le dispositif décrit dans l'une quelconque des revendications 1-15.
